(19) Europäisches Patentamt
European Patent Office
Office européen des brevets

(11) **EP 4 520 576 A1**

(12) **EUROPEAN PATENT APPLICATION**
published in accordance with Art. 153(4) EPC

(43) Date of publication:
**12.03.2025 Bulletin 2025/11**

(21) Application number: **23885040.8**

(22) Date of filing: **02.11.2023**

(51) International Patent Classification (IPC):
***B60L 15/20*** (2006.01)

(52) Cooperative Patent Classification (CPC):
Y02T 10/72

(86) International application number:
**PCT/CN2023/129300**

(87) International publication number:
**WO 2024/094114 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.11.2022 CN 202211376949**

(71) Applicant: **Chery Automobile Co., Ltd.**
**Wuhu, Anhui 241006 (CN)**

(72) Inventors:
• **CUI, Junbo**
  **Wuhu, Anhui 241006 (CN)**
• **FAN, Dinghong**
  **Wuhu, Anhui 241006 (CN)**

(74) Representative: **Yang, Shu**
**Withers & Rogers LLP**
**2 London Bridge**
**London SE1 9RA (GB)**

(54) **VEHICLE PARAMETER DETERMINATION METHOD, TORQUE DISTRIBUTION METHOD, DEVICE, AND VEHICLE**

(57)    The present disclosure provides a vehicle parameter determination method, a torque distribution method, a system, and a vehicle. The method comprises: according to a torque range of an electric drive assembly at a first voltage and a torque control precision threshold of the electric drive assembly, respectively determining front-wheel drive torque distribution coefficient ranges corresponding to multiple test points; for any test point, according to efficiency data of the electric drive assembly at the first voltage, determining, from the front-wheel drive torque distribution coefficient range corresponding to the test point, an optimal torque distribution coefficient corresponding to the test point to obtain an optimal torque distribution coefficient map at the first voltage; using a method the same as that for obtaining an optimal torque distribution coefficient relationship at the first voltage to obtain optimal torque distribution coefficient maps at multiple other voltages; and according to the optimal torque distribution coefficient maps at the first voltage and the multiple other voltages, obtaining an optimal torque distribution coefficient map of the electric drive assembly.

Determining, based on a torque range of an electric drive assembly at a first voltage and a torque control accuracy threshold of the electric drive assembly, first front-wheel drive torque distribution coefficients corresponding to a plurality of test points — S101

For any of the test points: determining, based on efficiency data of the electric drive assembly at the first voltage, an optimal torque distribution coefficient corresponding to the test point from the first front-wheel drive torque distribution coefficients corresponding to the test points, to acquire an optimal torque distribution coefficient map at the first voltage — S102

Acquiring, in a same manner as acquiring the optimal torque distribution coefficient map at the first voltage, optimal torque distribution coefficient maps at other voltages — S103

Acquiring, based on the optimal torque distribution coefficient maps at the first voltage and at the other voltages, an optimal torque distribution coefficient map of the electric drive assembly — S104

FIG. 1

## Description

The present disclosure claims priority to Chinese Patent Application No. 202211376949.2, filed on November 4, 2022 and entitled "TORQUE DISTRIBUTION METHOD FOR PURE ELECTRIC FOUR-WHEEL DRIVE, SYSTEM, AND VEHICLE", which is incorporated herein by reference in its entirety.

## TECHNICAL FIELD

The present disclosure belongs to the technical field of new energy vehicles, and relates to a vehicle parameter determination method, a torque distribution method, an apparatus, and a vehicle.

## BACKGROUND

At present, pure electric vehicles have increasingly high requirements for energy consumption. A pure electric four-wheel drive vehicle includes two sets of drive systems, namely electric front- and rear-wheel drives, and has larger total weight than a pure electric two-wheel drive vehicle. Due to the fact that both the electric front- and rear-wheel drives can achieve driving, there may be situations where the front-wheel drive and the rear-wheel drive achieve driving separately or simultaneously during actual driving. It is necessary to optimize the energy consumption of the pure electric four-wheel drive vehicle through a reasonable four-wheel drive torque distribution strategy.

## SUMMARY

Embodiments of the present disclosure propose a vehicle parameter determination method, a torque distribution method, an apparatus, and a vehicle.

The present disclosure proposes a vehicle parameter determination method, configured to determine an optimal torque distribution coefficient map of an electric drive assembly in a pure electric four-wheel drive vehicle, wherein the method includes:

determining, based on a torque range of the electric drive assembly at a first voltage and a torque control accuracy threshold of the electric drive assembly, front-wheel drive torque distribution coefficient ranges corresponding to a plurality of test points, wherein each of the plurality of test points is a point corresponding to a torque and a speed of the electric drive assembly, and the torques corresponding to each of the plurality of test points are within the torque range of the electric drive assembly;

for any test point: determining, based on efficiency data of the electric drive assembly at the first voltage, an optimal torque distribution coefficient corresponding to the test point within the front-wheel drive torque distribution coefficient range corresponding to the test point, to acquire an optimal torque distribution coefficient map at the first voltage;

acquiring, in a same manner as acquiring the optimal torque distribution coefficient map at the first voltage, optimal torque distribution coefficient maps at other voltages; and

acquiring, based on the optimal torque distribution coefficient maps at the first voltage and at the other voltages, the optimal torque distribution coefficient map of the electric drive assembly.

Optionally, the determining, based on the torque range and the speed range of the electric drive assembly at the first voltage and the torque control accuracy threshold of the electric drive assembly, the front-wheel drive torque distribution coefficient ranges corresponding to the plurality of test points includes:

determining that, if an absolute value of a torque corresponding to a first test point in the plurality of test points is less than a sum of values obtained by multiplying absolute values of torque control accuracy thresholds in a low-torque region of front- and rear-wheel drive motors by a speed ratio, the front-wheel drive torque distribution coefficient ranges include 0 and 1; and alternatively,

determining that, if an absolute value of the torque corresponding to a second test point in the plurality of test points is greater than or equal to the sum of the values obtained by multiplying the absolute values of the torque control accuracy thresholds in the low-torque region of the front- and rear-wheel drive motors by the speed ratio, the front-wheel drive torque distribution coefficient ranges are $[X, X+i, ..X+(N-1)i, ...1]$, wherein X is equal to a ratio of a product of the absolute value of a torque accuracy threshold of the front-wheel drive motor and a speed ratio of a front-wheel drive assembly to a torque corresponding to the second test point, i is a set interval, and N is an integer greater than 1.

Optionally, the determining, based on the efficiency data of the electric drive assembly at the first voltage, the optimal torque distribution coefficient corresponding to the test point within the front-wheel drive torque distribution coefficient range corresponding to the test point, to acquire the optimal torque distribution coefficient map at the first voltage includes:

calculating, based on efficiency test data of electric front- and rear-wheel drive systems at the first voltage, power losses corresponding to different front-wheel drive torque distribution coefficients within the front-wheel drive torque distribution coefficient ranges at a target test point, to acquire a power loss set, wherein the target test point is any one of the plurality of test points; and
determining, based on the power losses corresponding to the different front-wheel drive torque distribution coefficients, an optimal torque distribution coefficient corresponding to the target test point.

Optionally, the determining, based on the power losses corresponding to the different front-wheel drive torque distribution coefficients, the optimal torque distribution coefficient corresponding to the target test point includes: determining, based on a first front-wheel drive torque distribution coefficient, the optimal torque distribution coefficient corresponding to the target test point, wherein the first front-wheel drive torque distribution coefficient is a front-wheel drive torque distribution coefficient corresponding to a minimum power loss in the power loss set.

Optionally, the determining, based on the first front-wheel drive torque distribution coefficient, the optimal torque distribution coefficient corresponding to the target test point includes:

calculating, based on the first front-wheel drive torque distribution coefficient, a front-wheel drive demand torque and a rear-wheel drive demand torque; and
determining, based on the front-wheel drive demand torque, the rear-wheel drive demand torque, an output capability range of the front-wheel drive assembly, and an output capability range of a rear-wheel drive assembly, the optimal torque distribution coefficient corresponding to the target test point.

Optionally, the calculating the power losses corresponding to each torque distribution coefficient within the initial range of the torque distribution coefficients, and obtaining the power loss set includes:

calculating, based on the efficiency test data of the front- and rear-wheel drive assemblies at the first voltage and a zero-torque drag power loss of a front-wheel drive, a power loss in a case that the front-wheel drive torque distribution coefficient is 0; and
calculating, based on the efficiency test data of the front- and rear-wheel drive assemblies at the first voltage and a zero-torque drag power loss of a rear-wheel drive, a power loss in a case that the front-wheel drive torque distribution coefficient is 1.

Optionally, the method further includes: obtaining a pedal map of the vehicle in an operating mode; and determining, based on a maximum torque value in the pedal map, the torque range of the electric drive assembly at the first voltage.

Optionally, the other voltages and the first voltage at least include: a minimum operating voltage, a rated voltage, and a maximum operating voltage of the electric drive assembly.

The present disclosure further provides a torque distribution method for a pure electric four-wheel drive , including: searching, based on an input voltage and an output-side demand speed and torque of an electric drive assembly, an optimal torque distribution coefficient map of the electric drive assembly for a target front-wheel drive torque distribution coefficient, wherein the optimal torque distribution coefficient map of the electric drive assembly is acquired by the method according to any of the above paragraphs; and generating, based on the target front-wheel drive torque distribution coefficient, torque control instructions for a front-wheel assembly and a rear-wheel drive assembly.

The embodiments of the present disclosure further provide a torque distribution method for a pure electric four-wheel drive vehicle, including:

obtaining an operating mode and determine the pedal map corresponding to the operating mode;
determining, based on a pedal map, as well as torque capabilities and torque control accuracy thresholds of electric front- and rear-wheel drive assemblies at different voltages, a to-be-calculated torque range of the electric drive assembly and a to-be-calculated range of a front-wheel drive torque distribution coefficient at a set voltage;
determining, based on efficiency data of the electric drive assembly at different voltages and zero-torque drag power loss data of the electric front- and rear-wheel drive assemblies, an optimal torque distribution coefficient map at the set voltage;
determining an optimal torque distribution coefficient map at another voltage;
searching, based on a current voltage at an electric drive side and an output-side demand speed and torque, the torque distribution coefficient map for an optimal torque distribution coefficient; and

determining whether the optimal torque distribution coefficient meets a torque range of the electric drive assembly at the current voltage; if not, re-determining the torque distribution coefficient, otherwise determining whether vehicle stability is met; and if vehicle stability is met: generating torque control instructions for front- and rear-wheel drive motors, otherwise generating control instructions based on torques of the front- and rear-wheel drive motors calculated by a vehicle stability system or a vehicle control unit (VCU).

As an optional implementation, the determining the to-be-calculated torque range of the electric drive assembly at the set voltage specifically includes: determining, based on a maximum torque value in the pedal map, the to-be-calculated torque range of the electric drive assembly corresponding to a torque distribution map at the set voltage, wherein the maximum value in the pedal map is determined based on a maximum torque value of the front- and rear-wheel drive assemblies at different speeds or vehicle speeds.

As an optional implementation, the determining the to-be-calculated range of the front-wheel drive torque distribution coefficient at the set voltage specifically includes:

determining, if an absolute value of a vehicle demand torque is less than a sum of values of absolute values of torque control accuracy thresholds in a low-torque region of the front- and rear-wheel drive motors multiplied by a speed ratio, the torque distribution coefficient based on a minimum power loss corresponding to front-wheel drive torque distribution coefficients of 0 and 1.

As an optional implementation, the determining the to-be-calculated range of the front-wheel drive torque distribution coefficient at the set voltage specifically includes:

in a case that the absolute value of the vehicle demand torque is greater than the sum of the values obtained by multiplying the absolute values of the torque control accuracy thresholds in the low-torque region of the front- and rear-wheel drive motors by the speed ratio:

adjusting, based on torque control accuracies of front- and rear-wheel drives, the to-be-calculated range of the front-wheel drive torque distribution coefficient, wherein the front-wheel drive torque distribution coefficient ranges are discrete torque distribution coefficient ranges with a set distance as an interval: [absolute value of front-wheel drive motor torque accuracy threshold*speed ratio/output-side torque of certain electric drive assembly, 1].

As an optional implementation, the determining the optimal torque distribution coefficient map at the set voltage specifically includes:

additionally considering, in a case that the rear-wheel drive operates alone and the front-wheel drive operates alone, a zero-torque drag power loss of the front-wheel drive and a zero-torque drag power loss of the rear-wheel drive; comparing the two power losses corresponding to the torque distribution coefficient with a power loss corresponding to a calculated discrete front-wheel drive torque distribution coefficient between 0 and 1; and finding a first torque distribution coefficient K1' with a minimum power loss;

comparing the first torque distribution coefficient K1' with a value: absolute value of front-wheel drive motor torque accuracy threshold*speed ratio/output-side torque of certain electric drive assembly, to take a larger value (except for a first torque distribution coefficient of 0), thereby obtaining a second torque distribution coefficient K2';

determining, in a case of calculating demand torques for the front- and rear-wheel drives based on the second torque distribution coefficient K2', whether the demand torques for the front- and rear-wheel drives are within torque output capability ranges of the front- and rear-wheel drives; if so, keeping the second torque distribution coefficient K2' unchanged; and otherwise, re-determining the first torque distribution coefficient until the optimal torque distribution coefficient K1 is found, wherein the power loss at the first torque distribution coefficient is likely to be a second smallest value or other value (not a minimum value, as K2' is removed);

calculating, based on other specific points corresponding to the output-side speeds and torques of the electric drive assembly, optimal torque distribution coefficients K2,K3,K4...Kn according to the above three steps; and calculating, based on the optimal torque distribution coefficients K1,K2,K3,K4...Kn, the optimal torque distribution coefficient map within the output torque range of the electric front- and rear-wheel drive assembly systems at the set voltage.

As an optional implementation, the determining the optimal torque distribution coefficient map at another voltage specifically includes: changing a voltage value, and calculating, based on the process of calculating the optimal torque distribution coefficient map at the set voltage, at least the optimal torque distribution coefficient map including a minimum operating voltage, a rated voltage, and a maximum operating voltage of the electric drive system.

As an optional implementation, the forming the torque control instructions for the front- and rear-wheel drive motors specifically includes: obtaining a torque distribution coefficient for the front-wheel drive based on the optimal torque distribution coefficient map under different operating conditions, corresponding to the operating conditions of the electric drive assembly at different voltages, speeds, and torques, and based on a current voltage and speed and torque demands; and calculating demand torques of the front- and rear-wheel drive motors as the torque control instructions for the front- and rear-wheel drive motors.

The present disclosure further proposes a vehicle parameter determination apparatus, configured to determine an optimal torque distribution coefficient map of an electric drive assembly in a pure electric four-wheel drive vehicle, wherein the apparatus includes:

a range determination module, configured to determine, based on a torque range of the electric drive assembly at a first voltage and a torque control accuracy threshold of the electric drive assembly, front-wheel drive torque distribution coefficient ranges corresponding to a plurality of test points, wherein each of the plurality of test points is a point corresponding to a torque and a speed of the electric drive assembly, and the torque corresponding to the test point is within the torque range of the electric drive assembly;

a first map determination module, configured to, for any test point: determine, based on efficiency data of the electric drive assembly at the first voltage, an optimal torque distribution coefficient corresponding to the test point within the front-wheel drive torque distribution coefficient range corresponding to the test point, to acquire an optimal torque distribution coefficient map at the first voltage;

a second map determination module, configured to acquire, in a same manner as acquiring the optimal torque distribution coefficient map at the first voltage, optimal torque distribution coefficient maps at other voltages; and

a third map determination module, configured to acquire, based on the optimal torque distribution coefficient maps at the first voltage and at the other voltages, the optimal torque distribution coefficient map of the electric drive assembly.

The present disclosure further provides a torque distribution apparatus for a pure electric four-wheel drive, including:

a target coefficient determination module, configured to search, based on an input voltage and an output-side demand speed and torque of an electric drive assembly, an optimal torque distribution coefficient map of the electric drive assembly for a target front-wheel drive torque distribution coefficient, wherein the optimal torque distribution coefficient map of the electric drive assembly is acquired by the method according to any one of claims 1 to 8; and

a generation module, configured to generate, based on the target front-wheel drive torque distribution coefficient, torque control instructions for a front-wheel assembly and a rear-wheel drive assembly.

The present disclosure further provides a torque distribution apparatus for a pure electric four-wheel drive, including:

a first determination module, configured to obtain an operating mode and determine a pedal map corresponding to the operating mode; and determine, based on a pedal map, as well as torque capabilities and torque control accuracy thresholds of electric front- and rear-wheel drive assemblies at different voltages, a to-be-calculated torque range of the electric drive assembly and a to-be-calculated range of a front-wheel drive torque distribution coefficient at a set voltage;

a second determination module, configured to determine, based on efficiency data of the electric drive assembly at a determined voltage and zero-torque drag power loss data of the electric front- and rear-wheel drive assemblies, an optimal torque distribution coefficient map at the set voltage;

a third determination module, configured to determine, through a comparison based on the front-wheel drive torque distribution coefficient ranges determined by the first determination module and the optimal torque distribution coefficient map obtained by the second determination module, an optimal torque distribution coefficient map at the set voltage;

a fourth determination module, configured to determine an optimal torque distribution coefficient map at another voltage;

a searching module, configured to search, based on a current voltage at an electric drive side and an output-side demand speed and torque, the torque distribution coefficient map for an optimal torque distribution coefficient; and

a determining module, configured to determine whether vehicle stability is met; if so, generate torque control instructions for front- and rear-wheel drive motors; and otherwise generate control instructions based on torques of the front- and rear-wheel drive motors calculated by a vehicle stability system or a VCU.

The present disclosure further proposes an electronic device, including a processor and a computer-readable storage medium, wherein the computer-readable storage medium is configured to store instructions; and the processor, when executing the instructions, is caused to perform any one of the above methods.

The present disclosure further proposes a computer-readable storage medium, wherein the computer-readable storage medium is configured to store a computer program; and the computer program, when executed by a processor, causes the processor to perform any one of the above methods.

The present disclosure further proposes a pure electric four-wheel drive vehicle, including an electric drive assembly and an electronic device, wherein the electronic device is configured to control the electric drive assembly through the above torque distribution method.

The present disclosure further proposes a pure electric four-wheel drive vehicle, including the above apparatus or a terminal device, or being configured to distribute torques of front- and rear-wheel drive motors through the above torque distribution method.

BRIEF DESCRIPTION OF DRAWINGS

FIG. 1 is a flowchart of a vehicle parameter determination method according to some embodiments of the present disclosure;

FIG. 2 is a flowchart of another vehicle parameter determination method according to some embodiments of the present disclosure;

FIG. 3 is a flowchart of a torque distribution method for a pure electric four-wheel drive vehicle according to some embodiments of the present disclosure;

FIG. 4 is a flowchart of another torque distribution method for a pure electric four-wheel drive vehicle according to some embodiments of the present disclosure;

FIG. 5 is a structural diagram of a vehicle parameter determination apparatus according to some embodiments of the present disclosure;

FIG. 6 is a structural diagram of a torque distribution apparatus for a pure electric four-wheel drive vehicle according to some embodiments of the present disclosure; and

FIG. 7 is a structural diagram of an electronic device according to some embodiments of the present disclosure.

DETAILED DESCRIPTION

The present disclosure is described in further detail below with reference to the drawings and embodiments.

It should be noted that the following detailed descriptions are all exemplary and aim to further describe the present disclosure. Unless defined otherwise, all technical and scientific terms used herein have the same meanings as commonly understood by one of ordinary skill in the art to which the present disclosure belongs.

It should be noted that the terms used herein are merely used for describing specific implementations, but not intended to limit the exemplary implementations according to the present disclosure. As used herein, unless otherwise specified herein, the singular forms are also intended to include the plural forms. In addition, it should also be understood that when the terms "comprise" and/or "include" are used in this specification, they specify the presence of features, steps, operations, devices, components, and/or combinations thereof.

If an output torque of a front-wheel drive motor is $T_f$ and an output torque of a rear-wheel drive motor is $T_r$, then a front-wheel drive torque distribution coefficient $\lambda$ is calculated as follows: $\lambda = T_f/(T_f + T_r)$. Correspondingly, based on the front-wheel drive torque distribution coefficient $\lambda$, a rear-wheel drive torque distribution coefficient is $1-\lambda$. The front-wheel drive torque distribution coefficient and the rear-wheel drive torque distribution coefficient are in a corresponding relationship. After the front-wheel drive torque distribution coefficient is determined, the rear-wheel drive torque distribution coefficient is naturally determined, so only the front-wheel drive torque distribution coefficient is mentioned in the later solution description.

The embodiments of the present disclosure provide a vehicle parameter determination method for a pure electric four-wheel drive vehicle, configured to acquire an optimal torque distribution coefficient map of an electric drive assembly. The optimal torque distribution coefficient map of the electric drive assembly indicates a relationship between an input voltage of the electric drive assembly, an output torque and speed of the electric drive assembly, and a front-wheel drive (or rear-wheel drive) torque distribution coefficient. The embodiments of the present disclosure further provide a torque distribution method for a pure electric four-wheel drive vehicle, configured to perform torque distribution for a front-wheel drive and a rear-wheel drive based on the optimal torque distribution coefficient map of the electric drive assembly.

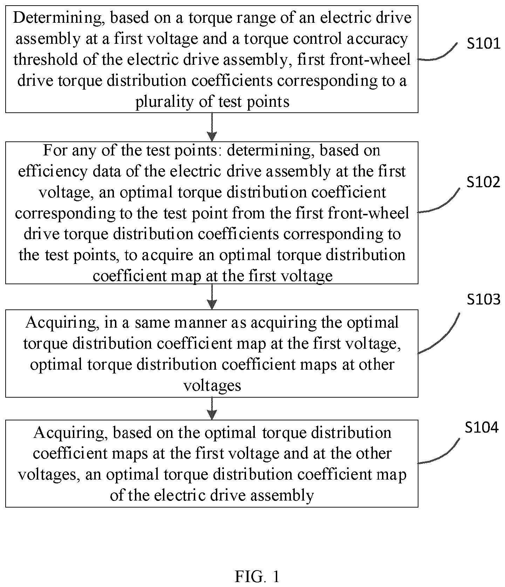

FIG. 1 is a flowchart of a vehicle parameter determination method according to embodiments of the present disclosure. The method is configured to determine an optimal torque distribution coefficient map of an electric drive assembly in a pure electric four-wheel drive vehicle. As shown in FIG. 1, the method includes the following steps.

In step S101, based on a torque range of the electric drive assembly at a first voltage and a torque control accuracy threshold of the electric drive assembly, front-wheel drive torque distribution coefficient ranges corresponding to a plurality of test points are determined.

Each of the plurality of test points is a point corresponding to a torque and a speed of the electric drive assembly, and the torques corresponding to each of the plurality of test points are within the torque range of the electric drive assembly.

In the embodiments of the present disclosure, the electric drive assembly includes a front-wheel drive assembly and a rear-wheel drive assembly. The torque range of the electric drive assembly refers to an output torque range of the electric drive assembly. The torque control accuracy threshold of the electric drive assembly includes at least one of a torque control accuracy threshold of a front-wheel drive motor or a torque control accuracy threshold of a rear-wheel drive motor.

The number and determination method of test points are not limited in the embodiments of the present disclosure. For example, a plurality of torque points are determined at a first interval within the torque range of the electric drive assembly at a first voltage, and a plurality of speed points are determined at a second interval within a set speed range. A torque point is combined with a speed point to form a test point. Each torque point is combined with each speed point to obtain a plurality of test points. At least one of the torque points and speed points corresponding to different test points is different.

The set speed range can be set based on experience, or determined based on a pedal map of the vehicle in an operating mode (such as based on a maximum speed value in the pedal map). The first interval and the second interval can be set in accordance with actual needs, and are not limited in the embodiments of the present disclosure. For example, the first interval is 50 N.m, 100 N.m, or 200 N.m, etc.; and the second interval is 100 rpm, 200 rpm, 300 rpm, 400 rpm, or 500 rpm, etc.

In step S102, for any test point, based on efficiency data of the electric drive assembly at the first voltage, an optimal torque distribution coefficient corresponding to the test point within the front-wheel drive torque distribution coefficient range is determined, and the optimal torque distribution coefficient map at the first voltage is acquired.

That is to say, the optimal torque distribution coefficient map at the first voltage includes the optimal torque distribution coefficients corresponding to each test point.

In step S103, optimal torque distribution coefficient maps at other voltages are acquired in the same manner as acquiring the optimal torque distribution coefficient map at the first voltage.

The optimal torque distribution coefficient maps at other voltages are determined in accordance with the steps S101 to 102.

In step S104, the optimal torque distribution coefficient map of the electric drive assembly is acquired based on the optimal torque distribution coefficient maps at the first voltage and the other voltages.

In the embodiments of the present disclosure, the first voltage and the plurality of other voltages refer to the input voltage of the electric drive assembly, and the values of the first voltage and the plurality of other voltages can be set in accordance with actual needs.

Due to the torque control accuracy of the electric drive assembly, in a case that the torque allocated to the front- or rear-wheel drive assembly is small, there may be negative values in the corresponding torque output range at the corresponding torque control accuracy, which is inconsistent with the vehicle's demand for positive driving torque. Therefore, in the embodiments of the present disclosure, the front-wheel drive torque distribution coefficient ranges are determined based on the torque control accuracy threshold of the electric drive assembly, thereby removing a front-wheel drive torque distribution coefficient of the driving torque that results in a negative value.

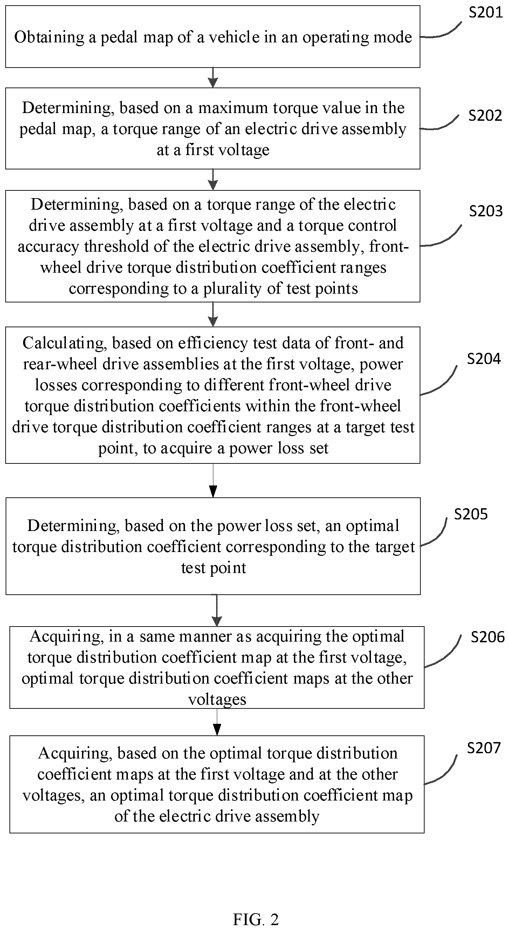

FIG. 2 is a flowchart of another vehicle parameter determination method according to some embodiments of the present disclosure. As shown in FIG. 2, the method includes the following steps.

In step S201, a pedal map of the vehicle in an operating mode is obtained.

The operating mode is also known as a driving mode, including but not limited to sport mode, economic (ECO) mode, or normal mode. The number and names of optional operating modes set for different vehicle models may vary. The operating mode of the vehicle can be selected by the user.

The pedal map is calibration data determined based on the torque output range and driving performance of the front- and rear-wheel drive assemblies, corresponding to torque requirements at different pedal openings and speeds (vehicle speeds). Different operating modes correspond to different pedal maps.

In step S202, based on the maximum torque value in the pedal map, the torque range of the electric drive assembly at the first voltage is determined.

Here, the first voltage refers to the input voltage of the electric drive system, and the working efficiency of the electric drive system varies at different input voltages.

Optionally, the step S202 includes the following content. Based on the maximum torque value in the pedal map and an external characteristic of the electric drive assembly at the first voltage, the torque range of the electric drive assembly at the first voltage is determined.

The external characteristic of the electric drive assembly at the first voltage refers to the maximum output capability of the electric drive assembly at the first voltage. The external characteristic of the electric drive assembly at the first voltage can be obtained through an experiment, such as by testing the output torque of the front- and rear-wheel drive motors at the first voltage.

In some examples, the torque range of the electric drive assembly at the first voltage can be determined as a smaller one of the maximum torque value in the pedal map and the maximum output capability of the electric drive.

In the embodiments of the present disclosure, the torque range of the electric drive assembly at the first voltage can also be referred to as a demand torque range at the first voltage.

In step S203, based on the torque range of the electric drive assembly at the first voltage and the torque control accuracy threshold of the electric drive assembly, the front-wheel drive torque distribution coefficient ranges corresponding to the plurality of test points is determined.

Each test point is a point corresponding to a torque and a speed of the electric drive assembly, and the torques corresponding to each of the test points are within the torque range of the electric drive assembly. The relevant content of the test points can be found in the step S201, and will not be described in detail here.

In the step S203, the determination on the front-wheel drive torque distribution coefficient ranges are divided into the following two cases.

In a first case, the absolute value of the vehicle demand torque is less than the sum of the values obtained by multiplying the absolute values of the torque control accuracy thresholds in the low-torque region of the front- and rear-wheel drive motors by the speed ratio.

At this point, the to-be-calculated front-wheel drive torque distribution coefficient includes only 0 and 1, which means that the front-wheel drive torque distribution coefficient ranges only include 0 and 1. Subsequently, the torque distribution coefficient is determined based on a minimum power loss corresponding to the front-wheel drive torque distribution coefficient of 0 or 1 (the corresponding rear-wheel drive torque distribution coefficient is 1 or 0).

In a second case, the absolute value of the vehicle demand torque is greater than the sum of the values obtained by multiplying the absolute values of the torque control accuracy thresholds in the low-torque region of the front- and rear-wheel drive motors by the speed ratio.

At this point, it is necessary to adjust the front-wheel drive torque distribution coefficient ranges based on the torque control accuracies of the front- and rear-wheel drive motors.

If the torque control accuracy of the motor is not considered, the front-wheel drive torque distribution coefficient ranges are [0,i...(N-1)i,...1], including 0, 1, and discrete points between 0 and 1, wherein i is the set interval, and N is an integer greater than 1. For example, assuming i is equal to 0.01, then if the torque control accuracy of the motor is not considered, the front-wheel drive torque distribution coefficient ranges are [0,0.01...0.99,1], including 0, 1, and discrete points between 0 and 1.

If the torque control accuracy of the motor is considered, the front-wheel drive torque distribution coefficient ranges are [X,X+i,...X+(N-1)i,... 1], wherein X is equal to a ratio of a product of the absolute value of the front-wheel drive motor torque accuracy threshold by the speed ratio of the front-wheel drive assembly to the torque corresponding to the second test point among the plurality of test points, i is a set interval, and N is an integer greater than 1. For example, assuming i is equal to 0.01, then if the torque control accuracy of the motor is considered, the front-wheel drive torque distribution coefficient ranges are [X,X+0.01...,0.99,1].

Exemplarily, the absolute value of the vehicle demand torque can be determined based on the pedal opening, and the torque control accuracy threshold in the low-torque region of the front- and rear-wheel drive motors is provided by the supplier.

In step S204, based on efficiency test data of front- and rear-wheel drive assemblies at the first voltage, power losses corresponding to different front-wheel drive torque distribution coefficients within the front-wheel drive torque distribution coefficient ranges at a target test point are calculated, and a power loss set is acquired.

The target test point is any one of the plurality of test points.

The step S204 may include the following content. Based on the efficiency test data of the front- and rear-wheel drive assemblies at the first voltage and a zero-torque drag power loss of a front-wheel drive, a power loss in a case that the front-wheel drive torque distribution coefficient is 0 is calculated. Based on the efficiency test data of the front- and rear-wheel drive assemblies at the first voltage and a zero-torque drag power loss of a rear-wheel drive, a power loss in a case that the front-wheel drive torque distribution coefficient is 1 is calculated. Considering the zero-torque drag power loss of the front-wheel drive and the zero-torque drag power loss of the rear-wheel drive can make the calculation of the power loss more accurate.

The calculation method for the power loss corresponding to the front-wheel drive torque distribution coefficient of greater than 0 and less than 1 can be found in the following text.

In step S205, based on the power loss set, an optimal torque distribution coefficient corresponding to the target test point is determined.

Exemplarily, based on the first front-wheel drive torque distribution coefficient, the optimal torque distribution coefficient corresponding to the target test point is determined. The first front-wheel drive torque distribution coefficient is a front-wheel drive torque distribution coefficient corresponding to a minimum power loss in power loss set.

Exemplarily, the step S205 includes the following content. Based on the first front-wheel drive torque distribution coefficient, a front-wheel drive demand torque and a rear-wheel drive demand torque are calculated. Based on the front-wheel drive demand torque, the rear-wheel drive demand torque, an output capability range of the front-wheel drive assembly, and an output capability range of a rear-wheel drive assembly, the optimal torque distribution coefficient corresponding to the target test point is determined.

In some examples, if the front-wheel drive demand torque is within the output capability ranges of the front-wheel drive assembly and the rear-wheel drive demand torque is within the output capability range of the rear-wheel drive assembly, the first front-wheel drive torque distribution coefficient is determined as the optimal torque distribution coefficient corresponding to the target test point.

In some other examples, if the front-wheel drive demand torque is outside the output capability range of the front-wheel drive assembly or the rear-wheel drive demand torque is outside the output capability range of the rear-wheel drive assembly, the second torque distribution coefficient is determined from the power loss set in ascending order of power loss. It is determined in the same way as the first front-wheel drive torque distribution coefficient whether the second torque distribution coefficient is the optimal torque distribution coefficient corresponding to the target test point, until the optimal torque distribution coefficient corresponding to the target test point is determined.

Through the steps S204 and S205, based on the efficiency data of the electric drive assembly at the first voltage, the optimal torque distribution coefficient corresponding to the target test point is determined within the front-wheel drive torque distribution coefficient ranges corresponding to the target test point. By calculating the optimal torque distribution coefficient corresponding to each test point, the optimal torque distribution coefficient map at the first voltage is obtained.

In step S206, optimal torque distribution coefficient maps at the other voltages are acquired in the same manner as acquiring the optimal torque distribution coefficient map at the first voltage.

The optimal torque distribution coefficient maps at other voltages are determined by the steps S201 to S205.

In step S207, the optimal torque distribution coefficient map of the electric drive assembly is acquired based on the optimal torque distribution coefficient maps at the first voltage and the other voltages.

In the embodiments of the present disclosure, the other voltages and the first voltage at least include: a minimum operating voltage, a rated voltage, and a maximum operating voltage of the electric drive assembly. Of course, they may further include other voltages besides these three types of voltages.

In some examples, the optimal torque distribution coefficient map of the electric drive assembly is the optimal torque distribution coefficient map at the first voltage and the other voltages.

In some other examples, the optimal torque distribution coefficient map of the electric drive assembly is obtained by interpolating different voltages. Through the voltage interpolation method, real-time interpolation of the front-wheel drive torque distribution coefficient at the input voltages of the electric drive assemblies is carried out to simulate the impact of continuous changes in the electric drive side voltage on the four-wheel drive torque distribution coefficient during actual driving of the vehicle, thereby optimizing the energy consumption of the pure electric four-wheel drive vehicle.

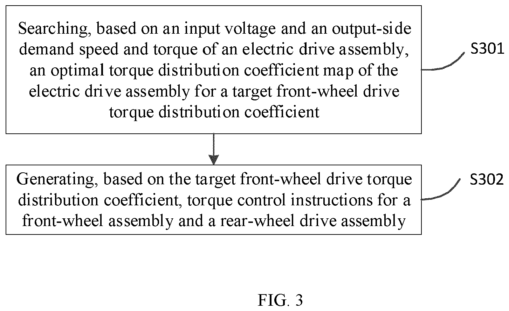

The embodiments of the present disclosure further provide a torque distribution method for a pure electric four-wheel drive vehicle. This method is executed by an onboard electronic device. As shown in FIG. 3, the method includes the following steps.

In step S301, based on an input voltage and an output-side demand speed and torque of an electric drive assembly, an optimal torque distribution coefficient map of the electric drive assembly is searched for a target front-wheel drive torque distribution coefficient.

The optimal torque distribution coefficient map of the electric drive assembly is obtained by the method shown in FIG. 1 or FIG. 2.

In step S302, based on the target front-wheel drive torque distribution coefficient, torque control instructions are generated for front- and rear-wheel drive assemblies.

The step S302 may include the following content. Based on the target front-wheel drive torque distribution coefficient and a vehicle demand torque, a front-wheel drive demand torque and a rear-wheel drive demand torque are determined. A torque control instruction is generated for the front-wheel drive assembly based on the front-wheel drive demand torque, and a torque control instruction is generated for the rear-wheel drive assembly based on the rear-wheel drive demand torque.

If vehicle stability is normal, the step S302 is performed. If the vehicle stability is abnormal, the demand torques of the front- and rear-wheel drive motors calculated by a vehicle electronic stability system controller or vehicle control unit (VCU) is used as final control instructions.

The embodiments of the present disclosure further provide a torque distribution method for a pure electric four-wheel drive vehicle. The method fully considers factors such as efficiency of electric front- and rear-wheel drive systems at different voltages, zero-torque power losses of the electric front- and rear-wheel drives, and torque control accuracies of the electric front- and rear-wheel drives for formulating a four-wheel drive torque distribution strategy. Thus, the electric front- and rear-wheel drive systems are controlled to participate in driving with appropriate torques, thereby achieving the goal of optimizing the energy consumption of the vehicle.

The method includes the following steps.

Firstly, an operating mode selected by a user is considered. Based on a pedal map corresponding to the operating mode selected by the user and an external characteristic of the electric drive assembly at a certain voltage, a torque range of the electric drive assembly corresponding to a torque distribution map at a certain voltage is determined.

For relevant information, please refer to the steps S201 and S202.

Then, based on impacts of torque control accuracies of the front- and rear-wheel drive motors on the torque distribution coefficients, a range of the front-wheel drive torque distribution coefficient is determined.

The determination on the front-wheel drive torque distribution coefficient ranges are specifically divided into the following two cases.

In a first case, the absolute value of the vehicle demand torque is less than the sum of the values obtained by multiplying the absolute values of the torque control accuracy thresholds in the low-torque region of the front- and rear-wheel drive motors by the speed ratio.

At this point, the to-be-calculated front-wheel drive torque distribution coefficient includes only 0 and 1, which means that the front-wheel drive torque distribution coefficient ranges only include 0 and 1. Subsequently, the torque distribution coefficient is determined based on a minimum power loss corresponding to the front-wheel drive torque distribution coefficient of 0 or 1 (the corresponding rear-wheel drive torque distribution coefficient is 1 or 0).

In a second case, the absolute value of the vehicle demand torque is greater than the sum of the values obtained by multiplying the absolute values of the torque control accuracy thresholds in the low-torque region of the front- and rear-wheel drive motors by the speed ratio.

At this point, it is necessary to adjust the front-wheel drive torque distribution coefficient ranges based on the torque control accuracies of the front- and rear-wheel drives. If the torque control accuracy of the motor is not considered, the front-wheel drive torque distribution coefficient ranges are [0,0.01...0.99,1], including 0, 1, and discrete points between 0 and 1, with an interval of 0.01. In other embodiments, the interval can be other values. This embodiment takes 0.01 as an example, but it can also be other values, such as 0.02.

If the torque control accuracy of the motor is considered, the front-wheel drive torque distribution coefficient ranges are [absolute value of front-wheel drive motor torque accuracy threshold*speed ratio/output-side demand torque of certain electric drive assembly,...,0.99, 1].

To ensure clear description of the solution, a typical embodiment is described below. It is assumed that certain torque control accuracies of the front- and rear-wheel drive motors are ±3 N.m within a range below 100 N.m and are ±3% within a range above 100 N.m. If the optimal torque distribution coefficient of the electric drive assembly corresponding to a specific point defined by an output-side speed of 100 rpm and a torque of 100 N.m and a reduction ratio of the front- and rear-wheel drive assemblies is 10, then the front-wheel drive torque distribution coefficient ranges are [3*10/100=0.30,0.31...0.99,1].

Similarly, the above example is used to illustrate the necessity of considering the torque control accuracy of the motor. It is assumed that the optimal torque distribution coefficient of the electric drive assembly corresponding to a specific point defined by an output-side speed of 100 rpm and a demand torque of 100 N.m needs to be calculated, the power loss is minimized when the front-wheel drive torque distribution coefficient is 0.05, and when the front-wheel drive torque distribution coefficient is 0.05, the front-wheel drive output needs to be 100*0.05/10=0.5 N.m. In this case, if the torque control accuracy of the front-wheel drive motor is ±3 N.m within the range below 100 N.m, the actual output torque of the motor is 0.5±3 N.m, which means the torque output range is between -2.5 N.m and 3.5 N.m. At this point, the front-wheel drive output torque may have a negative value, which is seriously inconsistent with the vehicle's demand for positive driving torque. Therefore, the demand torques of the front- and rear-wheel drive motors need to consider the torque control accuracies of the front- and rear-wheel drive motors. If the torque control accuracies are considered, the front-wheel drive torque distribution coefficient ranges may be narrower than the range of 0 to 1.

Next, based on the efficiency test data of the electric front- and rear-wheel drive systems at a certain voltage, the power losses of the vehicle controlled by different front-wheel drive torque distribution coefficients and corresponding to the specific points defined by the output-side speeds and torques of the electric drive assembly are calculated. The calculation results are compared to find the optimal front-wheel drive torque distribution coefficient K0.

In a possible implementation, the calculation of the power losses corresponding to the front-wheel drive torque distribution coefficients of 0 and 1 (the torque distribution coefficients respectively denote the rear-wheel drive alone and the front-wheel drive alone) needs to additionally consider the zero-torque drag power loss of the front-wheel drive and the zero-torque drag power loss of the rear-wheel drive. The power losses corresponding to these two front-wheel drive torque distribution coefficients are compared with the calculated power losses corresponding to the discrete torque distribution coefficients between 0 and 1 to find the first torque distribution coefficient K1' with the minimum power loss.

If the first front-wheel drive torque distribution coefficient K1' is 0, the first front-wheel drive torque distribution coefficient K1' is the target front-wheel drive torque distribution coefficient K0. If the first front-wheel drive torque distribution coefficient K1' is not 0, the first torque distribution coefficient K1' is compared with the value of (absolute value of front-wheel drive motor torque accuracy threshold*speed ratio/output-side torque of certain electric drive assembly), and the larger one of the two values is taken to obtain the second torque distribution coefficient K2'.

The front- and rear-wheel drive demand torques are calculated based on the second torque distribution coefficient K2', and it is determined whether the front- and rear-wheel drive demand torques are within the torque output capability ranges of the front- and rear-wheel drives. If the front- and rear-wheel drive demand torques are within the torque output capability ranges of the front-wheel drive and the rear-wheel drive, the second torque distribution coefficient K2' remains unchanged. That is, the second torque distribution coefficient K2' is the optimal front-wheel drive torque distribution coefficient K0. If the front- or rear-wheel drive demand torques are not within the torque output capability ranges of the front-wheel drive and the rear-wheel drive, the front-wheel drive torque distribution coefficient needs to be re-determined. The power loss corresponding to the optimal front-wheel drive torque distribution coefficient K0 may be a second smallest value or other value (not the minimum value, as the second torque distribution coefficient K2' corresponding to the minimum value is removed).

Then, optimal front-wheel drive torque distribution coefficients K1,K2,K3,K4...Kn corresponding to other specific points defined by the output-side speeds and torques of the electric drive assembly are calculated. It should be noted that these specific points defined by the output-side speeds and torques of the electric drive assembly refer to discrete points within the torque range in the pedal map and corresponding to the output capability ranges of the electric front- and rear-wheel drives and different operating modes. After the optimal torque distribution coefficients at these discrete points are calculated, the optimal torque distribution coefficient map of the electric front- and rear-wheel drive assembly systems at the certain voltage is obtained.

After the optimal torque distribution coefficient map of the electric front- and rear-wheel drive assembly systems at the certain voltage is obtained, the optimal torque distribution coefficient map at another voltage is calculated in accordance with the above process.

Finally, an optimal torque distribution coefficient map including at least three voltages is obtained. These three voltages at least include the minimum operating voltage, rated voltage, and maximum operating voltage of the electric drive system, which cover the entire operating range of the electric drive system well.

Through the above calculations, the optimal torque distribution coefficient map of entire vehicle under different operating conditions is obtained. Corresponding to the working conditions of the electric drive assembly at different voltages, speeds, and torques, the front-wheel drive torque distribution coefficient is obtained based on the current voltage, speed, and torque demands. The demand torques of the front- and rear-wheel drive motors are calculated, and torque control instructions of the front- and rear-wheel drive motors are generated based on the demand torques of the front- and rear-wheel drive motors.

It should be noted that the control torques of the front- and rear-wheel drive motors calculated in this process are valid if there is no problem with vehicle stability. If there is a problem with the vehicle stability, the demand torques of the front- and rear-wheel drive motors calculated by the vehicle electronic stability system controller or VCU are used as the final control instructions.

In the embodiments of the present disclosure, the four-wheel drive torque distribution strategy considers the efficiency of the electric front- and rear-wheel drive systems, the zero-torque power loss, and the impact of voltage changes on the electric drive system. It also takes into account the impact of the torque control accuracy of the electric drive system on the four-wheel drive torque distribution coefficient. The strategy utilizes voltage interpolation to search for the four-wheel drive torque distribution coefficient such that the front- and rear-wheel drive torque distribution coefficients change with the voltage variation at the electric drive side.

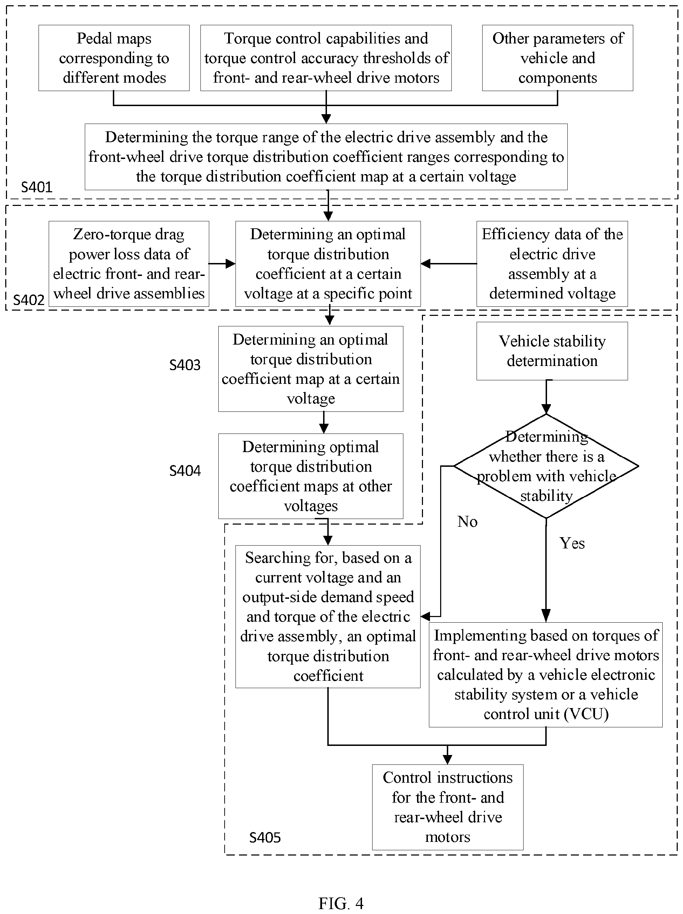

The overall process of the embodiments of the present disclosure is described below based on a typical embodiment. As shown in FIG. 4, the method includes the following steps.

In step S401, based on the pedal maps corresponding to different operating modes, the torque control accuracy thresholds of the front- and rear-wheel drive motors, and other parameters of the vehicle and components, the torque range of the electric drive assembly and the front-wheel drive torque distribution coefficient ranges corresponding to the torque distribution coefficient map at a certain voltage are determined.

If the operating mode selected by the user varies, the corresponding pedal map varies. The pedal map is calibration data determined based on the torque output range and driving performance of the front- and rear-wheel drive assemblies, corresponding to torque requirements at different pedal openings and speeds (or vehicle speeds). The main function of the pedal map is to determine the to-be-calculated torque range of the electric drive assembly corresponding to the torque distribution coefficient map at a certain voltage based on the maximum torque value of the pedal map. The control accuracy thresholds of the front- and rear-wheel drive motors, as well as other parameters of the vehicle and components, are configured to determine the to-be-calculated range of the front-wheel drive torque distribution coefficient.

If it is currently necessary to determine the torque distribution coefficients of the front- and rear-wheel drive assemblies of a certain vehicle model so as to control the front- and rear-wheel drive motors, the maximum torque output demand of the electric drive assembly corresponding to the pedal map in the ECO mode selected by the user is 5,500 N.m. Although the maximum output capability of the electric front- and rear-wheel drive sides calculated based on the capabilities of the front- and rear-wheel drive motors at 630 V is 7,000 N.m, the to-be-calculated torque range of the electric drive assembly at 630 V is ultimately determined to be between -5,500 N.m and 5,500 N.m.

In addition, for the torque distribution coefficient map of the front- and rear-wheel drive assemblies, it is assumed that the torque control accuracies of the front- and rear-wheel drive motors are $\pm 3$ N.m within a range below 100 N.m and

are $\pm 3\%$ within a range above 100 N.m, and the reduction ratio of the front- and rear-wheel drive assemblies is 10. To calculate the optimal torque distribution coefficient of the electric drive assembly corresponding to a specific point defined by an output-side speed of 100 rpm and 100 N.m in the torque distribution coefficient map of the front- and rear-wheel drive assemblies, the calculated range of the front-wheel drive torque distribution coefficient is [3*10/100=0.30,0.31... 0.99,1].

In step S402, based on the efficiency data of the electric drive assembly at different voltages and the zero-torque drag power loss data of the front- and rear-wheel drive assemblies, the optimal torque distribution coefficient of the electric drive assembly corresponding to a point defined by an output-side speed and torque at a certain voltage is determined.

The efficiency data of the electric drive assembly at different voltages refers to the efficiency test data of the electric drive assembly, which should include at least test data at three voltages (rated voltage, minimum operating voltage, and maximum operating voltage of the electric drive assembly). The zero-torque drag power loss data of the electric front- and rear-wheel drive assemblies is mainly configured to calculate the corresponding power loss corresponding to the front-wheel drive torque distribution coefficient of 0 or 1.

The calculation equations are as follows:

1. Vehicle drive:

$$P_{loss}=\left(\frac{\frac{T_r * n}{9550}}{\eta_r(T_r, n)} - \frac{T_r * n}{9550}\right)+\left(\frac{\frac{T_f * n}{9550}}{\eta_f(T_f, n)} - \frac{T_f * n}{9550}\right), \lambda \neq 0 \text{ or } \neq 1;$$

$$P_{loss}=P_{r\_drag}+\left(\frac{\frac{T_f * n}{9550}}{\eta_f(T_f, n)} - \frac{T_f * n}{9550}\right), \lambda=1;$$

$$P_{loss}=P_{f\_drag}+\left(\frac{\frac{T_r * n}{9550}}{\eta_r(T_r, n)} - \frac{T_r * n}{9550}\right), \lambda=0;$$

2. Vehicle braking energy recovery:

$$P_{loss}=\left|\left(\frac{T_r * n}{9550} - \frac{T_r * n}{9550} * \eta_r(T_r, n)\right)\right|+\left|\left(\frac{T_f * n}{9550} - \frac{T_f * n}{9550} * \eta_f(T_f, n)\right)\right|, \lambda \neq 0 \text{ or } \neq 1;$$

$$P_{loss}=P_{r\_drag}+\left|\left(\frac{T_f * n}{9550} - \frac{T_f * n}{9550} * \eta_f(T_f, n)\right)\right|, \lambda=1;$$

$$P_{loss}=P_{f\_drag}+\left|\left(\frac{T_r * n}{9550} - \frac{T_r * n}{9550} * \eta_r(T_r, n)\right)\right|, \lambda=0;$$

Wherein:

$P_{r\_drag}$ and $P_{f\_drag}$ represent power losses corresponding to the zero-torque output of the rear- and front-wheel drive assemblies, respectively, and are positive values in kW;

$T_r$ and $T_f$ denote the output torques of the rear- and front-wheel drive assemblies, respectively, in N.m;

n represents the output speeds of the rear- and front-wheel drive assemblies; in accordance with an example, the reduction ratio of both the front- and rear-wheel drives is 10, so the output speeds of the rear- and front-wheel drive assemblies are the same, in rpm; and the output speed can be obtained through measurement;

$\eta_r$ and $\eta_f$ represent efficiency functions of the rear- and front-wheel drive assemblies, respectively; and in actual calculations, efficiency test data can be used instead of the functions; and

$$\lambda = \frac{T_f}{(T_f + T_r)}$$

represents the front-wheel drive torque distribution coefficient.

Based on the above equations, $\lambda$ corresponding to minimum $P_{loss}$ (i.e. $\min(P_{loss})$) for drive or energy recovery is calculated. $\lambda$ is the optimal torque distribution coefficient of the electric drive assembly corresponding to the specific point defined by the output-side speed of 100 rpm and the torque of 100 N.m in the torque distribution coefficient map of the front- and rear-wheel drive systems.

In step S403, based on the step S402, the torque distribution coefficients of the electric drive assembly corresponding to other points defined by the output-side speeds and torques in the torque distribution coefficient map of the front- and rear-wheel drive assemblies at a certain voltage are calculated. After all these points are calculated, the optimal torque distribution coefficient map at 630 V is obtained.

In step S404, based on the steps S401 to S403, the optimal torque distribution coefficient maps at the other two voltages (i.e. the lowest 530 V and the highest 730 V) are calculated.

Of course, if there are efficiency data at other voltages, the torque distribution coefficient map with the minimum power loss outside at least these three voltages can also be obtained in accordance with the above process.

In step S405, it is determined whether there is any problem with the vehicle stability. If there is a problem with the vehicle stability, the output torques of the electric front- and rear-wheel drive systems are controlled based on the torques of the front- and rear-wheel drive motors calculated by the vehicle electronic stability system or the torques of the front- and rear-wheel drive motors calculated by the VCU. If there is no problem with the vehicle stability, the output torques of the electric front- and rear-wheel drive systems are controlled based on the torque distribution coefficient calculated in accordance with the above process.

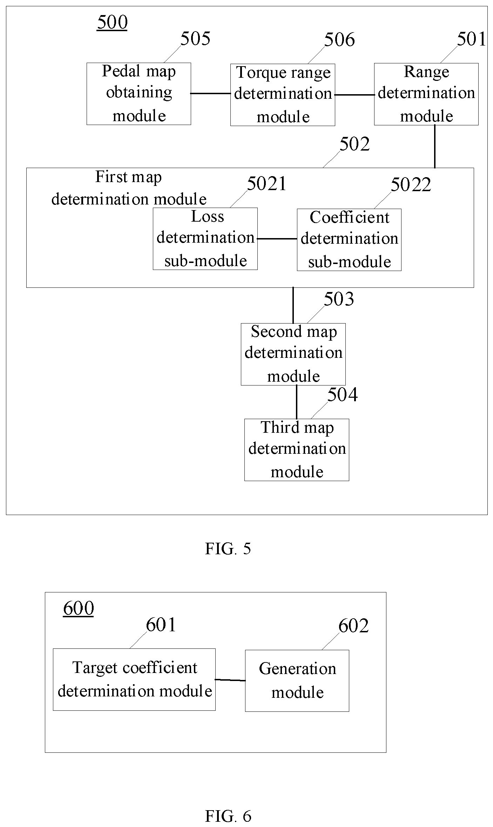

The embodiments of the present disclosure further provide a vehicle parameter determination method. As shown in FIG. 5, the apparatus includes: a range determination module 501, a first map determination module 502, a second map determination module 503, and a third map determination module 504.

The range determination module 501 is configured to determine, based on a torque range of the electric drive assembly at a first voltage and a torque control accuracy threshold of the electric drive assembly, front-wheel drive torque distribution coefficient ranges corresponding to a plurality of test points, wherein each of the test points is a point corresponding to a torque and a speed of the electric drive assembly, and the torques corresponding to each of the test points are within the torque range of the electric drive assembly.

The first map determination module 502 is configured to, for any of the test points: determine, based on efficiency data of the electric drive assembly at the first voltage, an optimal torque distribution coefficient corresponding to the test point within the front-wheel drive torque distribution coefficient ranges corresponding to the test points, to obtain an optimal torque distribution coefficient map at the first voltage.

The second map determination module 503 is configured to acquire, in a same manner as acquiring the optimal torque distribution coefficient map at the first voltage, optimal torque distribution coefficient maps at other voltages.

The third map determination module 504 is configured to acquire, based on the optimal torque distribution coefficient maps at the first voltage and at the other voltages, the optimal torque distribution coefficient map of the electric drive assembly.

Optionally, the range determination module 501 is configured to determine that, if an absolute value of a torque corresponding to a first test point in the plurality of test points is less than a sum of values obtained by multiplying absolute values of torque control accuracy thresholds in a low-torque region of front- and rear-wheel drive motors by a speed ratio, the front-wheel drive torque distribution coefficient ranges include 0 and 1; and alternatively, determine that, if an absolute value of the torque corresponding to a second test point in the plurality of test points is greater than or equal to the sum of the values obtained by multiplying the absolute values of the torque control accuracy thresholds in the low-torque region of the front- and rear-wheel drive motors by the speed ratio, the front-wheel drive torque distribution coefficient ranges are [X,X+i,...X+(N-1)i,... 1], wherein X is equal to a ratio of a product of the absolute value of a torque accuracy threshold of the front-wheel drive motor and a speed ratio of a front-wheel drive assembly to a torque corresponding to the second test point, i is a set interval, and N is an integer greater than 1.

Optionally, the first map determination module 502 includes a loss determination sub-module 5021 and a coefficient determination sub-module 5022.

The loss determination sub-module 5021 is configured to calculate, based on efficiency test data of electric front- and rear-wheel drive systems at the first voltage, power losses corresponding to different front-wheel drive torque distribution coefficients within the front-wheel drive torque distribution coefficient ranges at a target test point, to obtain a power loss set, wherein the target test point is any one of the plurality of test points.

The coefficient determination sub-module 5022 is configured to determine, based on the power loss set, an optimal torque distribution coefficient corresponding to the target test point.

Optionally, the coefficient determination sub-module 5022 is configured to determine, based on a first front-wheel drive torque distribution coefficient, the optimal torque distribution coefficient corresponding to the target test point, wherein the first front-wheel drive torque distribution coefficient is a front-wheel drive torque distribution coefficient corresponding to a minimum power loss in the power loss set.

Optionally, the coefficient determination sub-module 5022 is configured to calculate, based on the first front-wheel drive torque distribution coefficient, a front-wheel drive demand torque and a rear-wheel drive demand torque; and determine, based on the front-wheel drive demand torque, the rear-wheel drive demand torque, an output capability range of the front-wheel drive assembly, and an output capability range of a rear-wheel drive assembly, the optimal torque distribution coefficient corresponding to the target test point.

Optionally, the loss determination sub-module 5021 is configured to calculate, based on the efficiency test data of the front- and rear-wheel drive assemblies at the first voltage and a zero-torque drag power loss of a front-wheel drive, a power loss in a case that the front-wheel drive torque distribution coefficient is 0; and calculate, based on the efficiency test data of the front- and rear-wheel drive assemblies at the first voltage and a zero-torque drag power loss of a rear-wheel drive, a power loss in a case that the front-wheel drive torque distribution coefficient is 1.

Optionally, the apparatus further includes a pedal map obtaining module 505 and a torque range determination module 506.

The pedal map obtaining module 505 is configured to obtain a pedal map of the vehicle in an operating mode. The torque range determination module 506 is configured to determine, based on a maximum torque value in the pedal map, the torque range of the electric drive assembly at the first voltage.

It should be noted that when the vehicle parameter determination apparatus provided in the above embodiments determines the vehicle parameter, division of the above function modules is merely used as an example. In practical application, the above functions may be allocated to and completed by different function modules as required, that is, an internal structure of the device is divided into different function modules to complete all or some of the above functions. In addition, the vehicle parameter determination apparatus belongs to the same conception as the vehicle parameter determination method provided in the above embodiments. For a specific implementation process, refer to the method embodiments, and details are not described herein again.

FIG. 6 is a structural diagram of a torque distribution apparatus for a pure electric four-wheel drive vehicle according to some embodiments of the present disclosure. As shown in FIG. 6, the apparatus includes a target coefficient determination module 601 and a generation module 602.

The target coefficient determination module 601 is configured to search, based on an input voltage and an output-side demand speed and torque of an electric drive assembly, an optimal torque distribution coefficient map of the electric drive assembly for a target front-wheel drive torque distribution coefficient, wherein the optimal torque distribution coefficient map of the electric drive assembly is acquired by the method as defined in any one of claims 1 to 8. The generation module 602 is configured to generate, based on the target front-wheel drive torque distribution coefficient, torque control instructions for a front-wheel assembly and a rear-wheel drive assembly.

The embodiments of the present disclosure further provide a torque distribution apparatus for a pure electric four-wheel drive. The apparatus includes:

a first determination module, configured to obtain an operating mode and determine a pedal map corresponding to the operating mode; and determine, based on a pedal map, as well as torque capabilities and torque control accuracy thresholds of front- and rear-wheel drive motors, a to-be-calculated torque range of the electric drive assembly and a to-be-calculated range of a front-wheel drive torque distribution coefficient at a set voltage;

a second determination module, configured to determine, based on efficiency data of the electric drive assembly at a determined voltage and zero-torque drag power loss data of the electric front- and rear-wheel drive assemblies, an optimal torque distribution coefficient map at the set voltage;

a third determination module, configured to determine, through a comparison based on the front-wheel drive torque distribution coefficient ranges determined by the first determination module and the optimal torque distribution coefficient map obtained by the second determination module, an optimal torque distribution coefficient map at the set voltage;

a fourth determination module, configured to determine an optimal torque distribution coefficient map at another voltage;

a searching module, configured to search, based on a current voltage at an electric drive side and an output-side demand speed and torque, the torque distribution coefficient map for an optimal torque distribution coefficient; and

a determining module, configured to determine whether vehicle stability is met; if so, generate torque control instructions for front- and rear-wheel drive motors; and otherwise generate control instructions based on torques of the front- and rear-wheel drive motors calculated by a vehicle stability system or a VCU.

It should be noted that when the torque distribution apparatus provided in the above embodiments performs torque distribution, division of the above function modules is merely used as an example. In practical application, the above functions may be allocated to and completed by different function modules as required, that is, an internal structure of the apparatus is divided into different function modules to complete all or some of the above functions. In addition, the torque distribution apparatus and the torque distribution method provided in the above embodiments belongs to the same conception as the embodiments of the method. For a specific implementation process, refer to the method embodiments, and details are not described herein again.

The embodiments of the present disclosure further provide an electronic device, including a processor and a memory, wherein the memory is configured to store a plurality of instructions; and the processor is configured to execute the instructions to implement the above method.

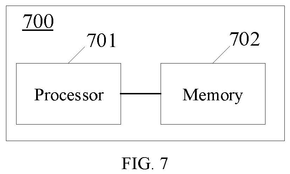

FIG. 7 is a structural diagram of an electronic device according to some embodiments of the present disclosure. The electronic device can be a computer device. As shown in FIG 7, the computer device 700 includes a processor 701 and a memory 702.

The processor 701 includes one or more processing cores, for example, a 7-core processor or an 8-core processor. The processor 701 is implemented by using at least one hardware form of digital signal processing (DSP), field-programmable gate array (FPGA), and programmable logic array (PLA). The processor 701 may alternatively include a main processor and a coprocessor. The main processor is configured to process data in an awake state, also referred to as a central processing unit (CPU), and the coprocessor is a low-power processor configured to process data in a standby state. In some embodiments, the processor 701 is integrated with a graphics processing unit (GPU). The GPU is configured to be responsible for rendering and drawing content that a display needs to display. In some embodiments, the processor 701 further includes an artificial intelligence (AI) processor. The AI processor is configured to process computing operations related to machine learning.

The memory 702 includes one or more computer-readable storage media, which may be non-transitory. The memory 702 may further include a high-speed random access memory (RAM) and a non-transitory memory such as one or more magnetic disk storage devices and a flash storage device. In some embodiments, the non-transitory computer-readable storage medium in the memory 702 is configured to store at least one instruction. The at least one instruction is executed by the processor 701 to implement a power supply control method for a hybrid electric vehicle provided in the embodiments of the present disclosure.

A person skilled in the art may understand that the structure shown in FIG. 7 does not constitute a limitation to the computer device 700, and it may include more or fewer components than those shown in the figure, or combine some components, or use a different component deployment.

The embodiments of the present disclosure further provide a non-transitory computer-readable storage medium. The computer-readable storage medium is configured to store a computer program; and the computer program, when executed by a processor, causes the processor to perform a test method for an ultrasonic radar control strategy of a vehicle.

The embodiments of the present disclosure further provide a computer program product, including a computer program/instruction, wherein the computer program/instruction is executed by a processor to perform a test method for an ultrasonic radar control strategy of a vehicle.

The embodiments of the present disclosure further provide a pure electric four-wheel drive vehicle, including the above apparatus or an electronic device, or being configured to distribute torques of front- and rear-wheel drive motors through the above method.

Those skilled in the art should understand that the embodiments of the present disclosure may be provided as a method, a system or a computer program product. Therefore, the present disclosure may use a form of hardware only embodiments, software only embodiments, or embodiments with a combination of software and hardware. Moreover, the present disclosure may use a form of a computer program product that is implemented on one or more computer-usable storage media (including but not limited to a disk memory, a compact disc read-only memory (CD-ROM) and an optical memory) that include computer-sensitive program codes.

The present disclosure is described with reference to the flowcharts and/or block diagrams of the method, the device (system) and the computer program product according to the embodiments of the present disclosure. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, such that the instructions executed by a computer or a processor of another programmable data processing device generate an apparatus for implementing a specific function in one or more processes in the flowcharts and/or in one or more blocks in the block diagrams.

These computer program instructions may be stored in a computer-readable memory that can instruct a computer or another programmable data processing device to work in a specific manner, such that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, such that a series of operations and steps are performed on the computer or the another programmable device, thereby generating computer-implemented processing. Therefore, the instructions executed on the computer or another programmable device provide steps for implementing a specific function in one or more processes in the flowcharts and/or in one or more blocks in the block diagrams.

The above are merely optional embodiments of the present disclosure and are not intended to limit the present disclosure, and various changes and modifications can be made to the present disclosure by those skilled in the art. Any modifications, equivalent substitutions, improvements, and the like made within the spirit and principle of the present disclosure should fall within the protection scope of the present disclosure.

**Claims**

1. A vehicle parameter determination method, configured to determine an optimal torque distribution coefficient map of an electric drive assembly in a pure electric four-wheel drive vehicle, wherein the method comprises:

   determining, based on a torque range of the electric drive assembly at a first voltage and a torque control accuracy threshold of the electric drive assembly, front-wheel drive torque distribution coefficient ranges corresponding to a plurality of test points, wherein each of the plurality of test points is a point corresponding to a torque and a speed of the electric drive assembly, and the torques corresponding to each of the plurality of test points are within the torque range of the electric drive assembly;

   for any test point: determining, based on efficiency data of the electric drive assembly at the first voltage, an optimal torque distribution coefficient corresponding to the test point within the front-wheel drive torque distribution coefficient range corresponding to the test point, to acquire an optimal torque distribution coefficient map at the first voltage;

   acquiring, in a same manner as acquiring the optimal torque distribution coefficient map at the first voltage, optimal torque distribution coefficient maps at other voltages; and

   acquiring, based on the optimal torque distribution coefficient maps at the first voltage and the other voltages, the optimal torque distribution coefficient map of the electric drive assembly.

2. The method according to claim 1, wherein the determining, based on the torque range and speed range of the electric drive assembly at the first voltage and the torque control accuracy threshold of the electric drive assembly, the front-wheel drive torque distribution coefficient ranges corresponding to the plurality of test points comprises:

   determining that, if an absolute value of a torque corresponding to a first test point in the plurality of test points is less than a sum of values obtained by multiplying absolute values of torque control accuracy thresholds in a low-torque region of front- and rear-wheel drive motors by a speed ratio, the front-wheel drive torque distribution coefficient ranges comprise 0 and 1; and alternatively,

   determining that, if an absolute value of the torque corresponding to a second test point in the plurality of test points is greater than or equal to the sum of the values obtained by multiplying the absolute values of the torque control accuracy thresholds in the low-torque region of the front- and rear-wheel drive motors by the speed ratio, the front-wheel drive torque distribution coefficient ranges are [X,X+i,...X+(N-1)i,...1], wherein X is equal to a ratio of a product of the absolute value of a torque accuracy threshold of the front-wheel drive motor and a speed ratio of a front-wheel drive assembly to a torque corresponding to the second test point, i is a set interval, and N is an integer greater than 1.

3. The method according to claim 2, wherein the determining, based on the efficiency data of the electric drive assembly at the first voltage, the optimal torque distribution coefficient corresponding to the test point within the front-wheel drive torque distribution coefficient range corresponding to the test point, to acquire the optimal torque distribution coefficient map at the first voltage comprises:

   calculating, based on efficiency test data of electric front- and rear-wheel drive systems at the first voltage, power losses corresponding to different front-wheel drive torque distribution coefficients within the front-wheel drive torque distribution coefficient ranges at a target test point, to acquire a power loss set, wherein the target test point is any one of the plurality of test points; and

determining, based on the power loss set, an optimal torque distribution coefficient corresponding to the target test point.

4. The method according to claim 3, wherein the determining, based on the power loss set, the optimal torque distribution coefficient corresponding to the target test point comprises:
determining, based on a first front-wheel drive torque distribution coefficient, the optimal torque distribution coefficient corresponding to the target test point, wherein the first front-wheel drive torque distribution coefficient is a front-wheel drive torque distribution coefficient corresponding to a minimum power loss in the power loss set.

5. The method according to claim 4, wherein the determining, based on the first front-wheel drive torque distribution coefficient, the optimal torque distribution coefficient corresponding to the target test point comprises:

   calculating, based on the first front-wheel drive torque distribution coefficient, a front-wheel drive demand torque and a rear-wheel drive demand torque; and
   determining, based on the front-wheel drive demand torque, the rear-wheel drive demand torque, an output capability range of the front-wheel drive assembly, and an output capability range of a rear-wheel drive assembly, the optimal torque distribution coefficient corresponding to the target test point.

6. The method according to claim 4, wherein the calculating the power losses corresponding to each torque distribution coefficient within the initial range of the torque distribution coefficients, and obtaining the power loss set comprises:

   calculating, based on the efficiency test data of the front- and rear-wheel drive assemblies at the first voltage and a zero-torque drag power loss of a front-wheel drive, a power loss in a case that the front-wheel drive torque distribution coefficient is 0; and
   calculating, based on the efficiency test data of the front- and rear-wheel drive assemblies at the first voltage and a zero-torque drag power loss of a rear-wheel drive, a power loss in a case that the front-wheel drive torque distribution coefficient is 1.

7. The method according to any one of claims 1 to 6, further comprising:

   obtaining a pedal map of the vehicle in an operating mode; and
   determining, based on a maximum torque value in the pedal map, the torque range of the electric drive assembly at the first voltage.

8. The method according to any one of claims 1 to 6, wherein the other voltages and the first voltage at least comprise: a minimum operating voltage, a rated voltage, and a maximum operating voltage of the electric drive assembly.

9. A torque distribution method for a pure electric four-wheel drive, comprising:

   searching, based on an input voltage of an electric drive assembly and an output-side demand speed and torque of the electric drive assembly, an optimal torque distribution coefficient map of the electric drive assembly for a target front-wheel drive torque distribution coefficient, wherein the optimal torque distribution coefficient map of the electric drive assembly is acquired by the method according to any one of claims 1 to 8; and
   generating, based on the target front-wheel drive torque distribution coefficient, torque control instructions for a front-wheel assembly and a rear-wheel drive assembly.

10. A vehicle parameter determination apparatus, configured to determine an optimal torque distribution coefficient map of an electric drive assembly in a pure electric four-wheel drive vehicle, wherein the apparatus comprises:

    a range determination module, configured to determine, based on a torque range of the electric drive assembly at a first voltage and a torque control accuracy threshold of the electric drive assembly, front-wheel drive torque distribution coefficient ranges corresponding to a plurality of test points, wherein each of the plurality of test points is a point corresponding to a torque and a speed of the electric drive assembly, and the torque corresponding to the test point is within the torque range of the electric drive assembly;
    a first map determination module, configured to, for any test point: determine, based on efficiency data of the electric drive assembly at the first voltage, an optimal torque distribution coefficient corresponding to the test point within the front-wheel drive torque distribution coefficient range corresponding to the test point, to acquire an optimal torque distribution coefficient map at the first voltage;

a second map determination module, configured to acquire, in a same manner as acquiring the optimal torque distribution coefficient map at the first voltage, optimal torque distribution coefficient maps at other voltages; and a third map determination module, configured to acquire, based on the optimal torque distribution coefficient maps at the first voltage and the other voltages, the optimal torque distribution coefficient map of the electric drive assembly.

11. The apparatus according to claim 10, wherein the range determination module is configured to:

determine that, if an absolute value of a torque corresponding to a first test point in the plurality of test points is less than a sum of values obtained by multiplying absolute values of torque control accuracy thresholds in a low-torque region of front- and rear-wheel drive motors by a speed ratio, the front-wheel drive torque distribution coefficient ranges comprise 0 and 1; and alternatively,
determine that, if an absolute value of the torque corresponding to a second test point in the plurality of test points is greater than or equal to the sum of the values obtained by multiplying the absolute values of the torque control accuracy thresholds in the low-torque region of the front- and rear-wheel drive motors by the speed ratio, the front-wheel drive torque distribution coefficient ranges are [X,X+i,...X+(N-1)i,...1], wherein X is equal to a ratio of a product of the absolute value of a torque accuracy threshold of the front-wheel drive motor and a speed ratio of a front-wheel drive assembly to a torque corresponding to the second test point, i is a set interval, and N is an integer greater than 1.

12. The apparatus according to claim 11, wherein the first map determination module comprises:

a loss determination sub-module, configured to calculate, based on efficiency test data of electric front- and rear-wheel drive systems at the first voltage, power losses corresponding to different front-wheel drive torque distribution coefficients within the front-wheel drive torque distribution coefficient ranges at a target test point, to acquire a power loss set, wherein the target test point is any one of the plurality of test points; and
a coefficient determination sub-module, configured to determine, based on the power loss set, an optimal torque distribution coefficient corresponding to the target test point.

13. The apparatus according to claim 12, wherein the coefficient determination sub-module is configured to determine, based on a first front-wheel drive torque distribution coefficient, the optimal torque distribution coefficient corresponding to the target test point, wherein the first front-wheel drive torque distribution coefficient is a front-wheel drive torque distribution coefficient corresponding to a minimum power loss in the power loss set.

14. The apparatus according to claim 13, wherein the coefficient determination sub-module is configured to:

calculate, based on the first front-wheel drive torque distribution coefficient, a front-wheel drive demand torque and a rear-wheel drive demand torque; and
determine, based on the front-wheel drive demand torque, the rear-wheel drive demand torque, an output capability range of the front-wheel drive assembly, and an output capability range of a rear-wheel drive assembly, the optimal torque distribution coefficient corresponding to the target test point.

15. The apparatus according to claim 14, wherein the loss determination sub-module is configured to:

calculate, based on the efficiency test data of the front- and rear-wheel drive assemblies at the first voltage and a zero-torque drag power loss of a front-wheel drive, a power loss in a case that the front-wheel drive torque distribution coefficient is 0; and
calculate, based on the efficiency test data of the front- and rear-wheel drive assemblies at the first voltage and a zero-torque drag power loss of a rear-wheel drive, a power loss in a case that the front-wheel drive torque distribution coefficient is 1.

16. The apparatus according to any one of claims 10 to 15, further comprising:

a pedal map obtaining module, configured to obtain a pedal map of the vehicle in an operating mode; and
a torque range determination module, configured to determine, based on a maximum torque value in the pedal map, the torque range of the electric drive assembly at the first voltage.

17. A torque distribution apparatus for a pure electric four-wheel drive, comprising:

a target coefficient determination module, configured to search, based on an input voltage of an electric drive assembly and an output-side demand speed and torque of the electric drive assembly, an optimal torque distribution coefficient map of the electric drive assembly for a target front-wheel drive torque distribution coefficient, wherein the optimal torque distribution coefficient map of the electric drive assembly is acquired by the method as defined in any one of claims 1 to 8; and

a generation module, configured to generate, based on the target front-wheel drive torque distribution coefficient, torque control instructions for a front-wheel assembly and a rear-wheel drive assembly.

18. An electronic device, comprising a processor and a computer-readable storage medium, wherein the computer-readable storage medium is configured to store instructions; and the processor, when executing the instructions, is caused to perform the method as defined in any one of claims 1 to 8 or the method as defined in claim 9.

19. A computer-readable storage medium, configured to store a computer program, wherein the computer program, when executed by a processor, causes the processor to perform the method as defined in any one of claims 1 to 8 or the method as defined in claim 9.

20. A pure electric four-wheel drive vehicle, comprising an electric drive assembly and an electronic device, wherein the electronic device is configured to control the electric drive assembly through the method as defined in claim 9.

Determining, based on a torque range of an electric drive assembly at a first voltage and a torque control accuracy threshold of the electric drive assembly, first front-wheel drive torque distribution coefficients corresponding to a plurality of test points — S101

For any of the test points: determining, based on efficiency data of the electric drive assembly at the first voltage, an optimal torque distribution coefficient corresponding to the test point from the first front-wheel drive torque distribution coefficients corresponding to the test points, to acquire an optimal torque distribution coefficient map at the first voltage — S102

Acquiring, in a same manner as acquiring the optimal torque distribution coefficient map at the first voltage, optimal torque distribution coefficient maps at other voltages — S103

Acquiring, based on the optimal torque distribution coefficient maps at the first voltage and at the other voltages, an optimal torque distribution coefficient map of the electric drive assembly — S104

FIG. 1

| Obtaining a pedal map of a vehicle in an operating mode | S201 |

| Determining, based on a maximum torque value in the pedal map, a torque range of an electric drive assembly at a first voltage | S202 |

| Determining, based on a torque range of the electric drive assembly at a first voltage and a torque control accuracy threshold of the electric drive assembly, front-wheel drive torque distribution coefficient ranges corresponding to a plurality of test points | S203 |

| Calculating, based on efficiency test data of front- and rear-wheel drive assemblies at the first voltage, power losses corresponding to different front-wheel drive torque distribution coefficients within the front-wheel drive torque distribution coefficient ranges at a target test point, to acquire a power loss set | S204 |

| Determining, based on the power loss set, an optimal torque distribution coefficient corresponding to the target test point | S205 |

| Acquiring, in a same manner as acquiring the optimal torque distribution coefficient map at the first voltage, optimal torque distribution coefficient maps at the other voltages | S206 |

| Acquiring, based on the optimal torque distribution coefficient maps at the first voltage and at the other voltages, an optimal torque distribution coefficient map of the electric drive assembly | S207 |

FIG. 2

Searching, based on an input voltage and an output-side demand speed and torque of an electric drive assembly, an optimal torque distribution coefficient map of the electric drive assembly for a target front-wheel drive torque distribution coefficient — S301

Generating, based on the target front-wheel drive torque distribution coefficient, torque control instructions for a front-wheel assembly and a rear-wheel drive assembly — S302

FIG. 3

Pedal maps corresponding to different modes

Torque control capabilities and torque control accuracy thresholds of front- and rear-wheel drive motors

Other parameters of vehicle and components

S401 Determining the torque range of the electric drive assembly and the front-wheel drive torque distribution coefficient ranges corresponding to the torque distribution coefficient map at a certain voltage

S402 Zero-torque drag power loss data of electric front- and rear-wheel drive assemblies

Determining an optimal torque distribution coefficient at a certain voltage at a specific point

Efficiency data of the electric drive assembly at a determined voltage

S403 Determining an optimal torque distribution coefficient map at a certain voltage

Vehicle stability determination

S404 Determining optimal torque distribution coefficient maps at other voltages

Determining whether there is a problem with vehicle stability

No

Yes

S405 Searching for, based on a current voltage and an output-side demand speed and torque of the electric drive assembly, an optimal torque distribution coefficient

Implementing based on torques of front- and rear-wheel drive motors calculated by a vehicle electronic stability system or a vehicle control unit (VCU)

Control instructions for the front- and rear-wheel drive motors

FIG. 4

500

505 506 501

Pedal map obtaining module — Torque range determination module — Range determination module

502

First map determination module

5021 5022

Loss determination sub-module — Coefficient determination sub-module

503

Second map determination module

504

Third map determination module

FIG. 5

600

601 602

Target coefficient determination module — Generation module

FIG. 6

700

701

702

Processor

Memory

FIG. 7

## INTERNATIONAL SEARCH REPORT

| International application No. |
|---|
| **PCT/CN2023/129300** |

**A. CLASSIFICATION OF SUBJECT MATTER**

B60L15/20(2006.01)i

According to International Patent Classification (IPC) or to both national classification and IPC

**B. FIELDS SEARCHED**

Minimum documentation searched (classification system followed by classification symbols)

IPC:B60L

Documentation searched other than minimum documentation to the extent that such documents are included in the fields searched

Electronic data base consulted during the international search (name of data base and, where practicable, search terms used)

CNTXT, CJFD, ENTXTC, WPABSC: 电机, 扭矩, 转矩, 分配, 效率, 系数, 精度, 误差, 范围; ENTXT, DWPI, VEN, WPABS, USTXT: torque, distribution, coefficient, efficiency, range, precision.

**C. DOCUMENTS CONSIDERED TO BE RELEVANT**

| Category* | Citation of document, with indication, where appropriate, of the relevant passages | Relevant to claim No. |
|---|---|---|
| PX | CN 115503507 A (CHERY AUTOMOBILE CO., LTD.) 23 December 2022 (2022-12-23) entire document | 1-20 |
| Y | CN 112477627 A (DONGFENG MOTOR CORPORATION) 12 March 2021 (2021-03-12) description, paragraphs 72-212, and figures 1-4 | 1, 7-10, 16-20 |
| Y | CN 114734835 A (ZHEJIANG ZEEKR INTELLIGENT TECHNOLOGY CO., LTD. et al.) 12 July 2022 (2022-07-12) description, paragraphs 70-145, and figures 1-5 | 1, 7-10, 16-20 |
| Y | CN 112163269 A (DONGFENG MOTOR CORPORATION) 01 January 2021 (2021-01-01) description, paragraphs 50-128, and figures 1-6 | 1, 7-10, 16-20 |
| A | US 2014067181 A1 (KATO MASAHIRO et al.) 06 March 2014 (2014-03-06) entire document | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **31 January 2024** | **06 February 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
|---|
| **PCT/CN2023/129300** |

| Patent document cited in search report | | | Publication date (day/month/year) | Patent family member(s) | | | Publication date (day/month/year) |
|---|---|---|---|---|---|---|---|
| CN | 115503507 | A | 23 December 2022 | None | | | |
| CN | 112477627 | A | 12 March 2021 | CN | 112477627 | B | 17 June 2022 |
| CN | 114734835 | A | 12 July 2022 | None | | | |
| CN | 112163269 | A | 01 January 2021 | CN | 112163269 | B | 01 November 2022 |
| US | 2014067181 | A1 | 06 March 2014 | US | 8935032 | B2 | 13 January 2015 |
| | | | | WO | 2012111159 | A1 | 23 August 2012 |
| | | | | EP | 2676831 | A1 | 25 December 2013 |
| | | | | EP | 2676831 | A4 | 17 February 2016 |
| | | | | JP | 5096636 | B1 | 12 December 2012 |
| | | | | JPWO | 2012111159 | A1 | 03 July 2014 |

Form PCT/ISA/210 (patent family annex) (July 2022)

**EP 4 520 576 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211376949